# EUROPEAN PATENT APPLICATION

(11) **EP 4 738 246 A1**
(43) Date of publication of application: **06.05.2026**
(21) Application number: 24831336.3
(22) Date of filing: 07.03.2024
(51) Int. Cl.: G06T 7/00, G06F 16/532, G06F 16/55, G06Q 30/0601, G06V 30/00

(54) **REGISTRATION DEVICE, REGISTRATION METHOD, RECOGNITION DEVICE, RECOGNITION METHOD, AND PROGRAM**

(30) Priority: 30.06.2023 JP 2023108923
(71) Applicant: Panasonic Intellectual Property Management Co., Ltd., Kadoma-shi, Osaka 571-0057 (JP)
(72) Inventor: UEDA, Junko, Kadoma-shi, Osaka 571-0057 (JP); UETA, Daisuke, Kadoma-shi, Osaka 571-0057 (JP); SHINZAKI, Makoto, Kadoma-shi, Osaka 571-0057 (JP); HASHIMOTO, Kiyoshi, Kadoma-shi, Osaka 571-0057 (JP); FUKUMOTO, Kazushi, Kadoma-shi, Osaka 571-0057 (JP)
(74) Representative: Eisenführ Speiser
(86) International application number: PCT/JP2024/008870
(87) International publication number: WO 2025/004459

(57) **Abstract**

A registration device includes a processor that performs a registration process of an article, and a database that stores information on the article, wherein the processor is configured to acquire first image data of an article to be registered in the database, calculate similarity of second image data of each of at least one registered article already stored in the database to the first image data of the article to be registered, determine whether there is a registered article of which similarity is equal to or more than a threshold, and when it is determined that there is a registered article of which similarity is equal to or more than the threshold, register detailed information indicating a detailed classification of the article to be registered in the database in association with the first image data.

## Description

### TECHNICAL FIELD

The present disclosure relates to a registration device, a registration method, a recognition device, a recognition method, and a program.

### BACKGROUND ART

Patent Literature 1 discloses an online shopping system including an image DB that stores product images, and a product information DB that stores size information and a stock status for each size category of product in association with a product image stored in the image DB. The online shopping system includes an image determination unit that extracts an image that matches a product image stored in the image DB based on a received product image, and extracts, with reference to the product information DB, product information associated with the image. The online shopping system further includes a conforming size determination unit that compares the size of the product extracted by the image determination unit with the size of a customer to determine a size category of the product conforming to the customer, and an information transmission unit that transmits the product information extracted by the image determination unit, the size category determined by the conforming size determination unit, and the stock status to a mobile terminal.

### Citation List

### Patent Literature

PTL 1: Unexamined Japanese Patent Publication No. 2009-294909

### SUMMARY OF THE INVENTION

In Patent Literature 1, the online shopping system stores, in a database, image data of a product in association with a product ID. Furthermore, the online shopping system can register the image data in association with the information related to the product by associating the product ID with the information related to the product. However, when the database includes a previously registered product having very similar outer appearances, recognizing an object based on the database may result in erroneously recognizing the object as a different one. An example of products having very similar outer appearances are, for example, shampoo products and treatment products having the same design.

The present disclosure has been devised in view of the above-described conventional situation, and an object of the present disclosure is to assist in highly accurate identification of an object.

The present disclosure provides a registration device including a processor that performs a registration process of an article, and a database that stores information on the article, wherein the processor is configured to acquire first image data of an article to be registered in the database, calculate similarity of second image data of each of at least one registered article already stored in the database to the first image data of the article to be registered, determine whether there is a registered article of which similarity is equal to or more than a threshold, and when it is determined that there is a registered article of which similarity is equal to or more than the threshold, register detailed information indicating a detailed classification of the article to be registered in the database in association with the first image data.

Furthermore, the present disclosure provides a registration method including acquiring first image data of an article to be registered in the database, calculating similarity of second image data of each of at least one registered article already stored in the database to the first image data of the article to be registered, determining whether there is a registered article of which similarity is equal to or more than a threshold, and when it is determined that there is a registered article of which similarity is equal to or more than the threshold, registering detailed information indicating a detailed classification of the article to be registered in the database in association with the first image data.

Furthermore, the present disclosure provides a recognition device including a processor communicably connected to a database in which article information is registered in advance, and configured to perform authentication of an object, wherein the processor is configured to determine whether there is an article similar to the object in the database, when it is determined that there is a similar article similar to the object in the database, determine whether registration information of the similar article stored in the database includes classification presence or absence information indicating whether a detailed classification of the similar article is included, and when it is determined that the classification presence or absence information indicating that the detailed classification is included is included, detect detailed information indicating a feature of the object from a captured image of the object.

Furthermore, the present disclosure provides a recognition method including determining whether there is an article similar to an object to be authenticated in a database in which article information is registered in advance, when it is determined that there is a similar article similar to the object in the database, determining whether registration information of the similar article stored in the database includes classification presence or absence information indicating whether a detailed classification of the similar article is included, and when it is determined that the classification presence or absence information indicating that the detailed classification is included is included, detecting detailed information indicating a feature of the object from a captured image of the object.

Furthermore, the present disclosure provides a program causing a computer to execute processing of determining whether there is an article similar to an object to be authenticated in a database in which article information is registered in advance, when it is determined that there is a similar article similar to the object in the database, processing of determining whether registration information of the similar article stored in the database includes classification presence or absence information indicating whether a detailed classification of the similar article is included, and when it is determined that the classification presence or absence information indicating that the detailed classification is included is included, processing of detecting detailed information indicating a feature of the object from a captured image of the object.

Note that, these comprehensive or specific aspects may be implemented by system, apparatus, method, integrated circuit, computer program, or recording medium, and may be implemented by any combination of system, apparatus, method, integrated circuit, computer program, and recording medium.

According to the present disclosure, highly accurate identification of an object can be assisted.

### BRIEF DESCRIPTION OF THE DRAWINGS

Fig. 1 is a view illustrating an example of articles having similar outer appearances.
Fig. 2 is a system configuration diagram of a recognition system according to the present exemplary embodiment.
Fig. 3 is a flowchart illustrating an example of an article registration process.
Fig. 4 is a flowchart illustrating an example of processing of calculating detailed information-location information.
Fig. 5 is a first example screen displayed on a display device.
Fig. 6 is a second example screen displayed on the display device.
Fig. 7 is a third example screen displayed on the display device.
Fig. 8 is a fourth example screen displayed on the display device.
Fig. 9 is a diagram illustrating an example of data stored in an article DB.
Fig. 10 is a flowchart illustrating an example of processing of recognizing an object.
Fig. 11 is a flowchart illustrating a detailed information recognition process.
Fig. 12 is a diagram illustrating an example of a screen displayed in an authentication process.

### DESCRIPTION OF EMBODIMENT

Hereinafter, an embodiment in which a registration device, a registration method, a recognition device, a recognition method, and a program according to the present disclosure are specifically disclosed will be described in detail with appropriate reference to the drawings. Unnecessarily detailed description may be omitted. For example, a detailed description of a well-known item and a redundant description of substantially the same configuration may be omitted. This is to avoid an unnecessarily redundant description in the following description and to facilitate understanding of a person skilled in the art. The accompanying drawings and the following description are provided for those skilled in the art to fully understand the present disclosure, and are not intended to limit the subject matter described in the claims.

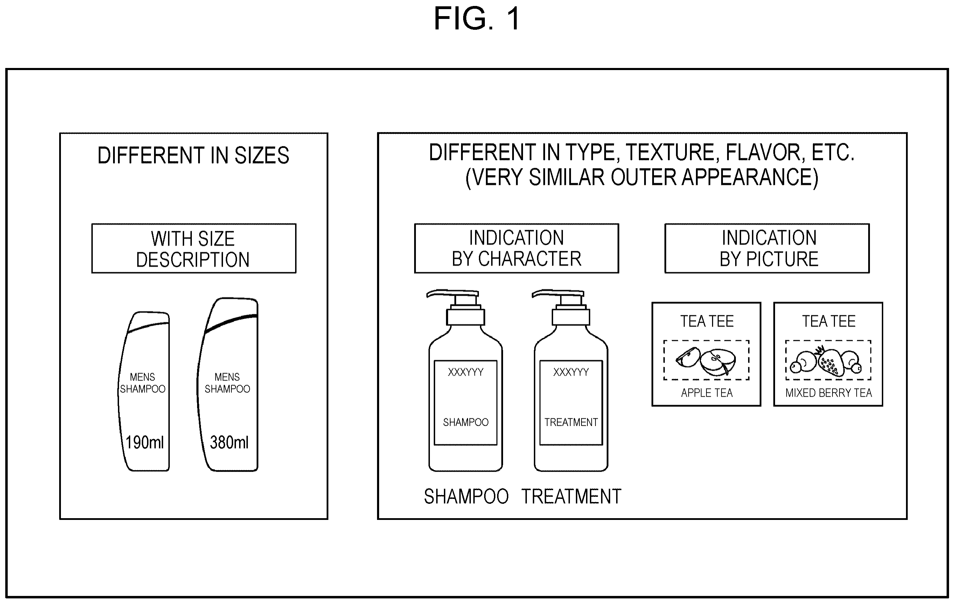

First, an example of articles having similar outer appearances will be described with reference to Fig. 1. Fig. 1 is a view illustrating an example of articles having similar outer appearances.

In recent years, there is a need of imaging an object with a camera to recognize the object based on a captured image. For example, in a case of recognizing a displayed product (that is, by recognizing a shelf layout) to automatically detect stockout or recognizing a product without reading a barcode or the like to perform automatic payment, accurate recognition of an object may improve convenience of a user (for example, a person who manages objects and the like).

For example, there is a method of recognizing an object using an image recognition technology such as deep metric learning using a database in which images of outer appearances of articles are registered in advance. However, when there is a plurality of articles having outer appearances similar to the object, it is difficult to accurately recognize what article the object is, and a similar article may be erroneously recognized as the object.

For example, as illustrated in Fig. 1, there is a case where articles hold the same content but differ in size, amount of content, or the like, that is, where the articles differ in text notation indicating the amount of content ("190 ml" and "380 ml") but except that have almost the same design in outer appearance. Since an object is cut out from a captured image and resized in an image recognition process, the information on the size of the object is lost. That is, accurately identifying the type of the object from the actual size of the object is difficult.

In addition, as illustrated in Fig. 1, there are articles that are very similar in outer appearance but differ in type, texture, or flavor (that is, aroma or taste) of the content. Such examples include shampoos and treatments, shampoos for damage care and shampoos for scalp care shampoos, or black tea of apple taste and black tea of strawberry taste. In such articles, a part of text ("SHAMPOO", "TREATMENT", etc.) or picture (a picture of apple, a picture of strawberry, etc.) are different and the other parts are almost identical in design. In addition, clothing such as underwear is in many cases put in a package of the same design except for a letter indicating the size, a figure indicating shape (such as the length of sleeves), and the like to be sold. In image recognition using a database in which images of outer appearances of articles are registered in advance, it is difficult to accurately identify a difference in small text or a difference in picture, and an object may be erroneously recognized as a different article.

In addition, for example, for some articles like shampoos and treatments having partially different colors, the difference in color can be identified by a deep metric learning technique, but it may fail to accurately determine the article under different illumination conditions where colors may change.

In this regard, there is a need of correctly recognizing an object where there are articles having similar outer appearances.

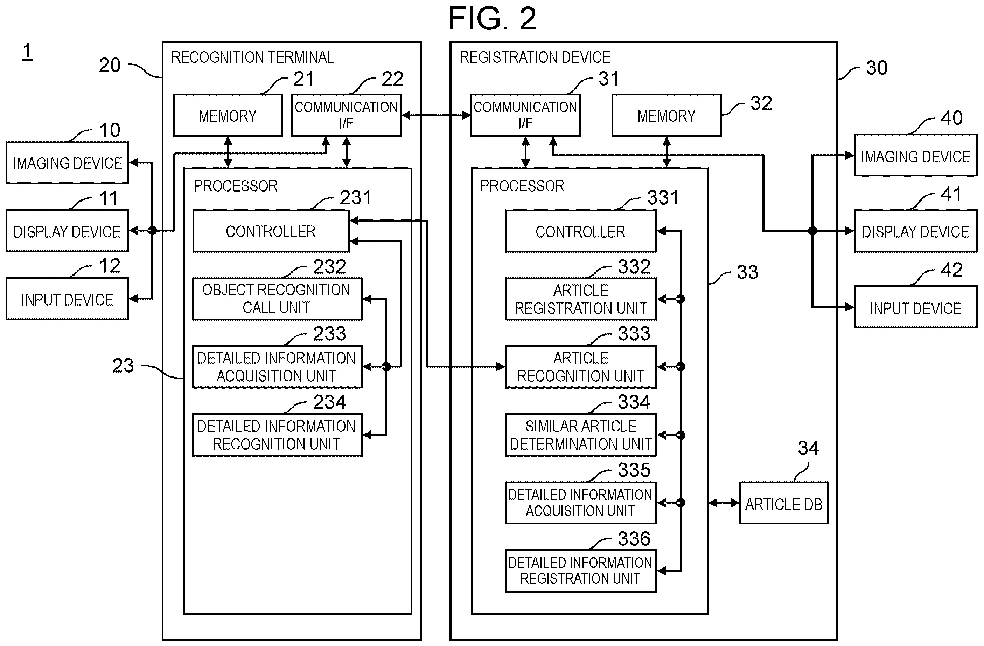

Next, a system configuration of recognition system 1 according to the present exemplary embodiment will be described with reference to Fig. 2. Fig. 2 is a system configuration diagram of recognition system 1 according to the present exemplary embodiment.

Recognition system 1 includes imaging device 10, display device 11, input device 12, recognition terminal 20, registration device 30, imaging device 40, display device 41, and input device 42.

Imaging device 10 is a device that captures an image when recognizing an object. Imaging device 40 is a device that captures an image when registering an image of an article in article DB 34 of registration device 30. Imaging device 10, 40 includes at least a lens (not illustrated) as an optical element and an image sensor (not illustrated). When an object is imaged, a light that is reflected by the object and is within the angle of view of the region imaged by the imaging device 10, 40 enters the lens, and the lens forms an optical image of the imaged object on a light receiving surface (or an imaging surface) of the image sensor. The image sensor is, for example, a solid-state imaging element such as a charged coupled device or a complementary metal oxide semiconductor. The image sensor converts an optical image formed on the imaging surface via the lens into an electric signal at every predetermined time interval (for example, 1/30 (second)). For example, when the predetermined time is 1/30 (second), the frame rate of imaging device 10, 40 is 30 fps. Furthermore, imaging device 10, 40 may generate image data (video data) by applying predetermined signal processing to the electrical signal at the predetermined time interval described above. The image data is a still image, and the video data is a movie. Hereinafter, the image data and the video data are referred to as captured image. Imaging device 10 outputs the captured images to recognition terminal 20. Imaging device 40 outputs captured images to registration device 30.

Display device 11 is a device that displays an authentication result of the object, a progress, a check screen, or the like. Display device 41 is a screen that displays registration information of article DB 34, the progress and result of registration of an article to article DB 34 of registration device 30, and the like. Display device 11, 41 is, for example, a display. Note that display device 11 may be integrated with recognition terminal 20. Note that display device 41 may be integrated with registration device 30. In such a case, display device 11, 41 is a screen of a personal computer or the like.

Input device 12 is a device that receives an input when authentication of the object is performed. Input device 42 is a device that receives inputs of various kinds of information of an article from a user when registration of the article is performed. Furthermore, input device 42 may read data of articles distributed by a company or the like who sells the articles, and output the data to registration device 30. Input device 12, 42 includes, for example, a keyboard, a mouse, a touch pen, or the like. Note that input device 12 may be integrated with display device 11, and input device 42 may be integrated with display device 41. In such a case, input device 12, 42 is a touch panel display or the like.

Recognition terminal 20 is a terminal device used when authentication of the object is performed. Recognition terminal 20 includes memory 21, communication I/F 22, and processor 23.

Memory 21 is configured with, for example, a random access memory (hereinafter referred to as "RAM") and a read only memory (hereinafter referred to as "ROM"), and temporarily holds a program necessary for an operation of recognition terminal 20 and also data generated during the operation. The RAM is, for example, a work memory used when recognition terminal 20 is in operation. The ROM stores in advance and holds, for example, a program for controlling recognition terminal 20.

Communication I/F 22 is an interface circuit that performs wireless or wired communication among imaging device 10, display device 11, input device 12, processor 23, and communication I/F 31. I/F is an interface. Note that communication with communication I/F 31 may be performed via a network. The method of communication performed by communication I/F 22 is wired communication or wireless communication. Specifically, wireless communication may be mobile communication, such as a wide area network (hereinafter referred to as "WAN"), a local area network (hereinafter referred to as "LAN"), long term evolution (hereinafter referred to as "LTE"), 4G, and 5G, power line communication, near field wireless communication (for example, Bluetooth (registered trademark) communication), communication for mobile phones, or the like. Note that the method of wireless communication is not limited to the examples described above.

Processor 23 is, for example, a central processing unit (hereinafter referred to as "CPU"), a digital signal processor (hereinafter, referred to as DSP), a graphical processing unit (hereinafter referred to as "GPU"), or a field programmable gate array (hereinafter referred to as "FPGA"). Processor 23 functions as a controller that controls the overall operation of recognition terminal 20. Processor 23 performs control processing for integrating the operations of the units of recognition terminal 20, data input/output processing among the units of recognition terminal 20, data calculation processing, and data storage processing. Processor 23 operates by instruction from a program stored in memory 21. Processor 23 uses memory 21 when operated, and temporarily stores in memory 21 data generated or acquired by processor 23. Processor 23 implements the functions of controller 231, object recognition call unit 232, detailed information acquisition unit 233, and detailed information recognition unit 234 by using the program and data stored in memory 21.

Controller 231 controls imaging device 10, display device 11, and input device 12 via communication I/F 22. When recognizing the object, controller 231 performs processing of calling article recognition unit 333 of registration device 30 based on an instruction received from object recognition call unit 232.

When recognizing the object, object recognition call unit 232 outputs, to controller 231, an instruction to cause article recognition unit 333 to perform recognition process on the object.

Detailed information acquisition unit 233 acquires detailed information of the object from article DB 34 of registration device 30 based on the object recognition result output from controller 231.

Detailed information recognition unit 234 recognizes detailed information from a captured image of the object based on the detailed information acquired by detailed information acquisition unit 233 from article DB 34.

Note that processor 23 may further include an object recognition unit (not illustrated). The object recognition unit recognizes an object and calculates a score of similarity, to the object, of a captured image of an article registered in article DB 34. When the object recognition unit is omitted from processor 23, article recognition unit 333 and similar article determination unit 334 of registration device 30 perform recognition of the object and calculation of the score of similarity.

Registration device 30 is a device that registers in article DB 34 a captured image and various kinds of information of an article. The various kinds of information include, for example, article name, article type, article identification (hereinafter referred to as "ID"), article inventory quantity, article size/volume, and article release date. Here, the article is a product sold in a store, an item managed in a warehouse, or the like. Registration device 30 includes communication I/F 31, memory 32, processor 33, and article DB 34.

Communication I/F 31 is an interface circuit that performs wireless or wired communication among communication I/F 22, imaging device 40, display device 41, input device 42, and processor 33. Note that communication with communication I/F 22 may be performed via a network. The method of communication performed by communication I/F 31 is wired communication or wireless communication. Specifically, wireless communication may be mobile communication, such as a WAN, a LAN, an LTE, 4G, and 5G, power line communication, near field wireless communication (for example, Bluetooth (registered trademark) communication), communication for mobile phones, or the like. Note that the method of wireless communication is not limited to the examples described above.

Memory 32 is configured with, for example, a RAM and a ROM, and temporarily holds a program necessary for an operation of registration device 30 and further, data generated during operation. The RAM is, for example, a work memory used while registration device 30 is in operation. The ROM stores and holds in advance, for example, a program for controlling registration device 30.

Processor 33 is, for example, a CPU, a DSP, a GPU, or an FPGA. Processor 33 functions as a controller that controls the overall operation of registration device 30. Processor 33 performs control processing for integrating the operations of the units of registration device 30, data input/output processing among the units of registration device 30, data calculation processing, and data storage processing. Processor 33 operates by instructions from a program stored in memory 32. Processor 33 uses memory 32 when in operation, and temporarily stores in memory 32 data generated or acquired by processor 33. Processor 33 implements the functions of controller 331, article registration unit 332, article recognition unit 333, similar article determination unit 334, detailed information acquisition unit 335, and detailed information registration unit 336 by using the program and data stored in memory 32.

Controller 331 controls imaging device 40, display device 41, and input device 42. Controller 331 outputs a captured image received from imaging device 40 to article registration unit 332. Controller 331 outputs article information received from input device 42 to detailed information acquisition unit 335.

Article registration unit 332 registers the captured image of an article in article DB 34. Article registration unit 332 registers the article information received from input device 42 in association with the captured image. The article information is, for example, an article name, an article type, an article ID, an article inventory quantity, an article size/volume, or an article release date.

Article recognition unit 333 recognizes the article using a known technique such as an image recognition technique, and calculates, as a score, similarity of a different article already stored in article DB 34. It is assumed that the higher the similarity, the higher the score is. The score is calculated by a numerical value such as percentage. Note that the score may be three-grade evaluation such as low, medium, and high.

Similar article determination unit 334 determines whether the score of the article calculated by article recognition unit 333 and stored in article DB 34 is equal to or more than a predetermined threshold, and selects an article of which score is equal to or more than the predetermined threshold from among the articles stored in article DB 34. The predetermined threshold is, for example, a value determined by a person who constructs recognition system 1.

When similar article determination unit 334 has determined that an article similar to the article to be registered is stored in article DB 34, detailed information acquisition unit 335 extracts detailed information from the captured image using a known character recognition technique such as optical character recognition. The detailed information is, for example, a text or a design such as a picture representing a difference from a similar article. For example, the detailed information is a text indicating a volume, a text indicating a type of contents such as shampoo and treatment, a design indicating a flavor such as a drawing of an apple. Note that the detailed information described above is an example and is not limited thereto.

Detailed information registration unit 336 registers the detailed information acquired by detailed information acquisition unit 335 in article DB 34 in association with the captured image and the article information that are output by article registration unit 332 to article DB 34. Note that article registration unit 332 and detailed information registration unit 336 may be configured as a single registration unit.

Article DB 34 is a database in which a captured image, information, and detailed information of an article are registered in association with each other. Article DB 34 is a nonvolatile storage device, for example, a hard disk drive, a solid state drive, a universal serial bus memory, an optical disk, or a magnetic tape.

### (Registration Process)

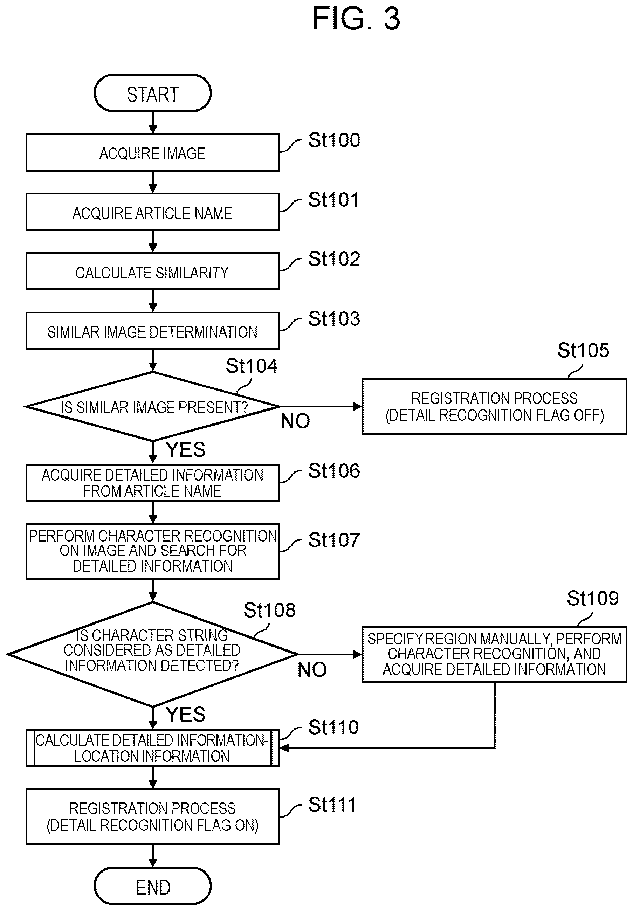

First, a method of a registration process of article information in a database will be described. With reference to Fig. 3, the registration process of an article will be described. Fig. 3 is a flowchart illustrating an example of the registration process of an article. Each process in the flowchart in Fig. 3 is executed by processor 33.

Controller 331 controls imaging device 40 to capture an image of an article. Controller 331 acquires the captured image of the article from imaging device 40 via communication I/F 31 (step St100). Instead of the captured image of the article, controller 331 may acquire an image of the outer appearance of the article from distribution data that is distributed by a company or the like who sells the article and is input to input device 42. Hereinafter, a captured images of the outer appearance of an article to be stored in article DB 34 and a captured image of an article already stored in article DB 34, and distribution data are referred to as image data.

Controller 331 displays a screen that requests input of a name of the article on display device 41. Controller 331 acquires, from input device 42, the name of the article input to input device 42 by a user based on an instruction on the screen displayed on display device 41 (step St101). Note that the user may select an article to be registered from data of information related to articles and distributed in advance by a company or the like who sells the articles, to input the article to input device 42.

Controller 331 outputs the image data acquired in the processing of step St100 and the name of the article acquired in the processing of step St101 to article registration unit 332. Furthermore, controller 331 outputs the image data acquired in the processing of step St100 to article recognition unit 333.

Article recognition unit 333 calculates the score of similarity to each piece of image data of an article already stored in article DB 34 and acquired from controller 331 (step St102). Article recognition unit 333 calculates the similarity using a known technique. For example, article recognition unit 333 calculates a feature amount of each captured image using a known technique, and compares the feature amounts to calculate the similarity. Article recognition unit 333 outputs the calculated score of similarity of each piece of image data to similar article determination unit 334.

Similar article determination unit 334 determines whether the score of each piece of image data is equal to or more than a predetermined threshold (step St103).

Similar article determination unit 334 determines whether the score of each piece of image data is equal to or more than a predetermined threshold, and determines whether there is a piece of image data whose score is equal to or more than the predetermined threshold (that is, whether there is a similar image) (step St104).

When it is determined that there is no similar image (NO in step St104), similar article determination unit 334 executes the registration process (step St105). In the registration process, similar article determination unit 334 outputs to article registration unit 332 an instruction to register the image data and the name of the article in article DB 34 and information indicating that there is no similar article (that is, information indicating that the detail recognition flag is off). Article registration unit 332 stores the image data and the name of the article in article DB 34. In this action, article registration unit 332 may also store the feature amount calculated by article recognition unit 333 in article DB 34. Note that, since the similarity of the article can be determined using the feature amount without using the image data, storing of the image data may be omitted when the feature amount is to be stored. However, since the feature amount may vary depending on, for example, the environment in which the image data is captured or an algorithm used for calculation, storing both image data and feature amount in article DB 34 allows article registration unit 332 to operate under various situations. In addition, when storing the image data and the name of the article in article DB 34, article registration unit 332 performs registration while a detail recognition flag is off. The detail recognition flag is a flag indicating whether an article similar to the article to be registered exists in article DB 34. When an article similar to the article to be registered exists in article DB 34, the detail recognition flag is on. When an article similar to the article to be registered does not exist in article DB 34, the detail recognition flag is off. The detail recognition flag can be read as classification presence or absence information.

When it is determined that there is a similar image (YES in step St104), similar article determination unit 334 outputs a signal indicating that there is a similar image to detailed information acquisition unit 335.

Detailed information acquisition unit 335 acquires from the name of the article a text that is considered as detailed information indicating a feature (step St106). The detailed information indicating a feature of the article is a text indicating the type, texture, color, shape, application, flavor, or the like of the article. For example, when the article name is "XXXYYY TREATMENT REFILL 425 ml", detailed information acquisition unit 335 extracts "TREATMENT" which is a text that is considered as detailed information. Furthermore, for example, when the article name is "apple taste black tea", detailed information acquisition unit 335 extracts "apple" which is a text that is considered as detailed information. Furthermore, when there is a plurality of words indicating the features of the article such as when the article name is "XXXYYY TREATMENT SCALP CARE REFILL 425 ml", detailed information acquisition unit 335 may extract a plurality of words such as "TREATMENT SCALP CARE" as detailed information. Further, the detailed information does not necessarily be a meaningful word or a group of words. For example, when the article name is "apple taste black tea", "app", which is a part of "apple", which is considered as detailed information, can be used to sufficiently distinguish from "strawberry taste black tea". Furthermore, detailed information acquisition unit 335 may extract, as detailed information, information indicating a feature different from a feature of a similar article among the information indicating the features of the article. For example, in the above-example, "TREATMENT" is information indicating a feature of the article, but is not suitable as article information since distinguishing from similar articles is difficult. Thus, they are not suitable as article information, and may be excluded from the target to be extracted as detailed information. Examples of a method of extracting a text that is considered as detailed information from the name of the article include a method in which a user selects a text from text candidates automatically displayed on display device 41 by processor 33 or a user inputs a text that is considered as detailed information to input device 42. Note that, when processor 33 automatically displays text candidates on display device 41, detailed information acquisition unit 335 may extract as a candidate a text that is not used in the article name of similar articles. For example, regarding "XXXYYY TREATMENT REFILL 425 ml" and "XXXYYY TREATMENT SCALP CARE REFILL 425 ml", detailed information acquisition unit 335 extracts "SCALP CARE" as a candidate. This is because texts other than "scalp care" are common to both the articles, and cannot be used to distinguish articles when used as detailed information. Hereinafter, the detailed information is defined to include a text or a character string indicating a feature of the article and extracted from the name of the article, and a text, a character string, or an image such as a design indicating a feature of the article and extracted from the image data of the article. Note that both text and character string are character information including one or more characters. In the present exemplary embodiment, character information extracted from image data and processed as necessary is referred to as a text, and character information included in image data is referred to as a character string. However, this distinction is not strict, and depending on the context, expressions of text and character string may be used without distinction. Note that examples of one-character information suitable to be used as detailed information include "S", "M", and "L" indicating sizes. A text or a character string indicating a feature of an article extracted from the name of the article is read as a first information. A text, a character string, and an image such as a design indicating a feature of an article extracted from the image data of the article are read as a second information. Further, the first information and the second information are read as detailed information.

Detailed information acquisition unit 335 performs character recognition on image data, and searches for a character string having the content indicated by the text acquired in the processing of step St106 (step St107). Note that detailed information acquisition unit 335 may search for a picture of the content indicated by the text acquired in the processing of step St106 using a known technique such as image recognition. For example, when the text acquired in the processing of step St106 is "apple", detailed information acquisition unit 335 searches for a picture of an apple. For example, registration device 30 holds in memory 32 a dictionary (dictionary for storing hiragana, katakana, English, and synonyms for texts) for rephrasing of the text acquired in the processing of step St106, and detailed information acquisition unit 335 may search for a character string based on the dictionary. Further, detailed information acquisition unit 335 may search for a character string based on a similar word of the text acquired in the processing of step St106.

Detailed information acquisition unit 335 determines whether a character string that is considered as detailed information has been detected (step St108).

When it is determined that no character string that is considered as detailed information has been detected (NO in step St108), detailed information acquisition unit 335 displays, on display device 41, a screen prompting the user to manually select a region of a character string that is considered as detailed information from the image data. Detailed information acquisition unit 335 performs character recognition on the region based on the input operation executed by the user from input device 42 to acquire detailed information (step St109). Processor 33 proceeds to the processing of step St110 after the processing of step St109.

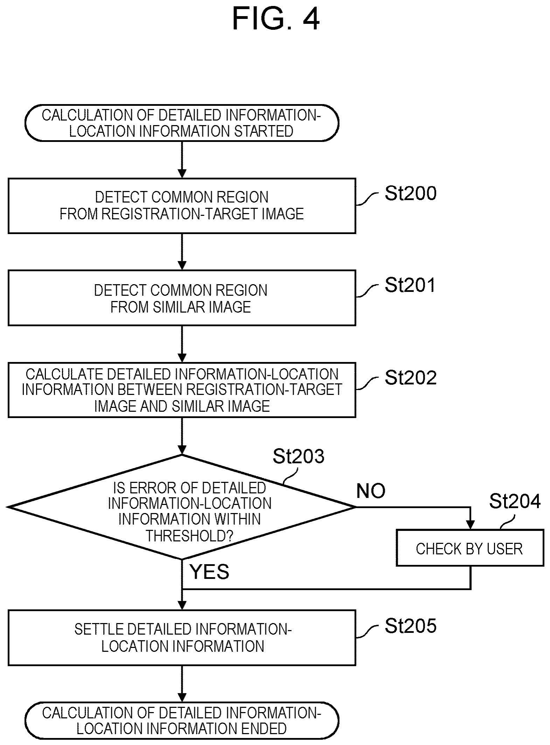

When it is determined that a character string that is considered as detailed information is detected (YES in step St108), detailed information acquisition unit 335 executes processing of calculating the location of the detailed information in the image data (calculation of detailed information-location information) (step St110). Calculation of detailed information-location information will be described in detail with reference to Fig. 4. When the detailed information is detected, detailed information acquisition unit 335 sets a rectangular frame enclosing all the character strings that are detailed information. Note that the processing from step St106 to step St110 is performed on both the image data of an article to be registered and the image data of a similar article.

Detailed information acquisition unit 335 outputs the detailed information and the location information of the detailed information to detailed information registration unit 336. Detailed information registration unit 336 registers the image data, the name of the article, the detailed information, and the location information of the detailed information in article DB 34 in association with each other (step St111). Note that detailed information acquisition unit 335 turns on the detail recognition flag of the article when executing the processing of step St111. In addition, detailed information registration unit 336 turns on the detail recognition flag also for a similar article registered in advance in article DB 34, and overwrites with and stores the detailed information and the detailed information-location information. The detail recognition flag allows identifying whether the article is an article that needs detailed classification. Here, the detailed classification of the article means that when recognizing the object, recognition terminal 20 extracts detailed information from the captured image of the object using the detailed information and the detailed information-location information, and performs classification based on the extracted detailed information.

Next, processing of calculating the detailed information-location information will be described with reference to Fig. 4. Fig. 4 is a flowchart illustrating an example of the processing of calculating detailed information-location information.

Detailed information acquisition unit 335 detects a common region in an image to be registered (that is, a registration-target image) in article DB 34 (step St200). The common region is a region where there is a design common between the outer appearance of the article to be registered and the outer appearance of an article already registered in article DB 34 and similar to the article to be registered. For example, the common region is a logo type or a figure indicating a brand name of an article. That is, detailed information acquisition unit 335 detects from the registration-target image a region where there is a design common to the similar image. The common region is defined by a rectangular frame including therein the targeted design. Note that the frame for defining the common region is not limited to a rectangle, and may have a different shape such as a circle or a triangle, but is here a rectangle for convenience in the following description. The size of the frame is, for example, a size larger than the minimum size to include the targeted design by several percentages. The size of the frame may be automatically set or may be arbitrarily set by a user. Detailed information acquisition unit 335 detects the design and the size of the common region.

Detailed information acquisition unit 335 detects the common region in the similar image (step St201).

Detailed information acquisition unit 335 calculates location information (hereinafter, referred to as detailed information-location information) of the detailed information of the registration-target image and the similar image (step St202). The location of the detailed information is indicated by relative location with respect to the common region. The relative location is represented by, for example, a relative coordinate where a predetermined coordinate of the common region is taken as a reference. When indicating the location of the detailed information, for example, a reference point is set at the center of the common region, and the location is indicated by the vertical and horizontal sizes of the common region and the angle and the distance from the reference point to the center in the frame specified in the detailed information. Note that the reference point to indicate the location of the detailed information may not be the center of the common region, and may be an arbitrary point (for example, any end point) of the frame. Furthermore, the location of the detailed information may be indicated by the angle and the distance from the reference point in the common region to an arbitrary point within the frame (for example, an end point on the frame) specified in the detailed information.

Detailed information acquisition unit 335 determines whether an error (that is, locational deviation) of the detailed information-location information of each of the registration-target image and the similar image is within a predetermined threshold (step St203).

When it is determined that the error of the detailed information-location information of each of the registration-target image and the similar image is not within the predetermined threshold (NO in step St203), detailed information acquisition unit 335 displays on display device 41 a screen prompting the user for a check. The user refers to the information of the common region and the detailed information-location information displayed on display device 41, checks whether the location of the detailed information is correct, and, when the location of the detailed information is correct, inputs to input device 42 that the location is correct. When the location of the detailed information is incorrect, the user inputs instruction of the correct location to input device 42. Detailed information acquisition unit 335 settles the detailed information-location information based on the information input by the user to input device 42 (step St205).

When it is determined that the error of the detailed information-location information of each of the registration-target image and the similar image is within the predetermined threshold (YES in step St203), detailed information acquisition unit 335 settles the detailed information-location information (step St205).

Note that detailed information acquisition unit 335 may store, as the information of the detected common region, the design and the size of the common region in article DB 34 in association with the information of the corresponding article.

As described above, when storing the image data of the article, the name of the article, and the like in article DB 34, if there exists an article having a similar outer appearance, registration device 30 can associate the detailed information indicating the feature of the article in the image data with the image data of the article, the name of the article, and the like. Furthermore, registration device 30 can store in article DB 34 the location of the detailed information indicating the feature of the article in the image data of the article in association with the registration information of the article. As a result, when recognizing the object using article DB 34, if there is an article having very similar outer appearance, recognition terminal 20 can perform character recognition or image recognition at the location of the detailed information, so that the detailed information can be extracted with high accuracy. That is, recognition terminal 20 can recognize the object based on the extracted detailed information, and thus erroneous recognition can be prevented. In this manner, registration device 30 can generate a database that assists in highly accurate identification of an object.

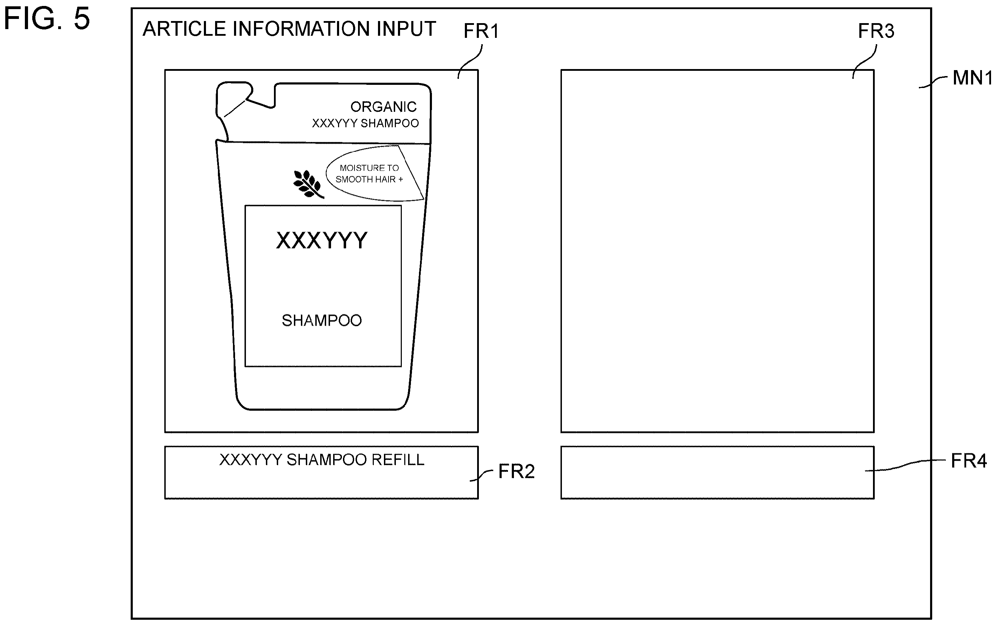

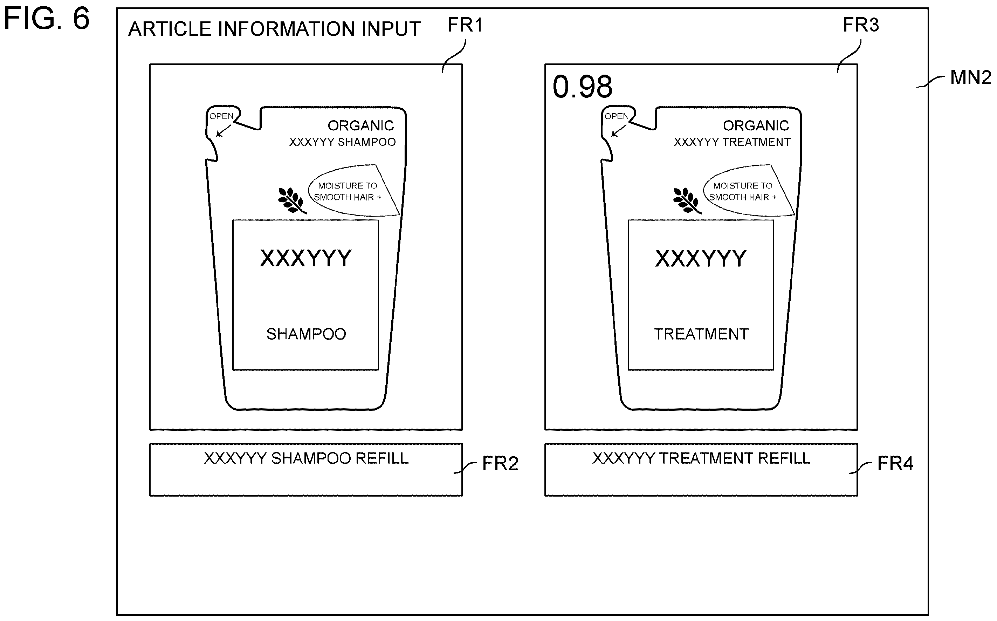

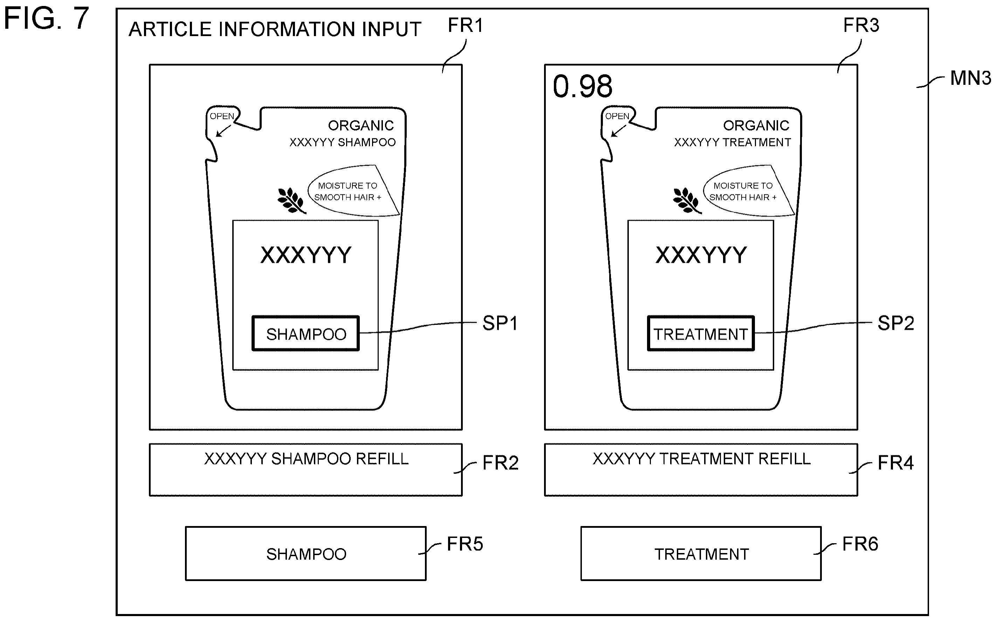

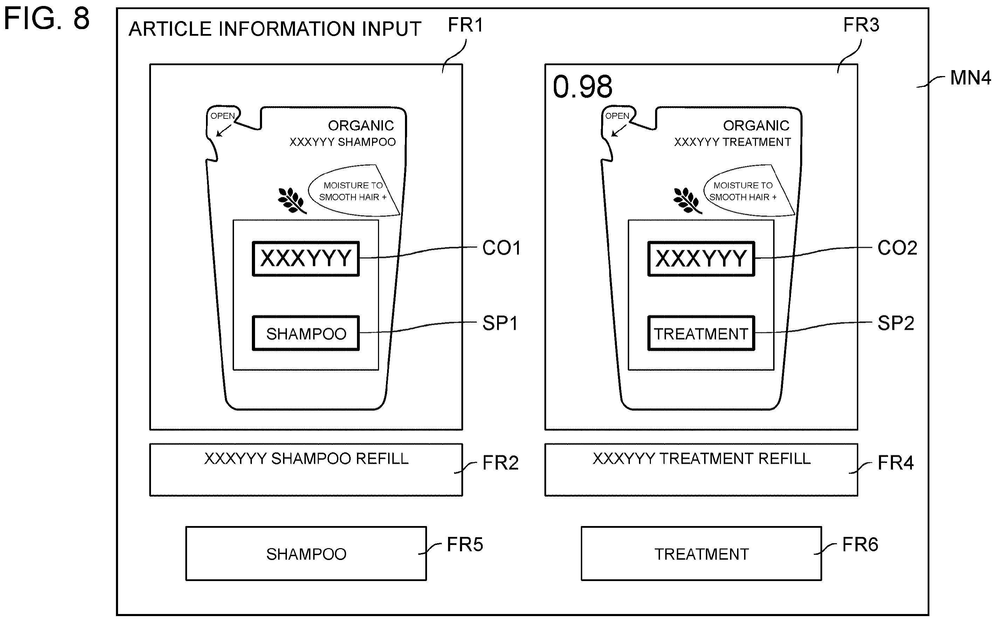

Next, a flow of an example screen displayed on display device 41 will be described with reference to Figs. 5, 6, 7, and 8. Fig. 5 is a first example screen displayed on display device 41. Fig. 6 is a second example screen displayed on display device 41. Fig. 7 is a third example screen displayed on display device 41. Fig. 8 is a fourth example screen displayed on display device 41.

Screen MN1 is an example screen indicating the input information of an article to be registered in article DB 34.

Frame FR1 displays a captured image output from imaging device 40 to registration device 30 or an image input from input device 42. Frame FR2 displays the name of the article output from input device 42. In the example illustrated in Fig. 5, "XXXYYY shampoo refill" is displayed in frame FR2. Frame FR3 is a frame in which image data of a similar article that is similar to the article to be registered, if there is any, among the articles stored in article DB 34 is displayed. Frame FR4 is a frame in which the name of a similar article is displayed.

As illustrated in MN2, when it is determined that there is an article similar to the article to be registered among the articles stored in article DB 34, the image data of the similar article is displayed in frame FR3. A score indicating similarity is displayed at a predetermined location in frame FR3. In the example illustrated in Fig. 6, the score is displayed at a corner of frame FR3, but the location where the score is displayed may be anywhere. In frame FR4, "XXXYYY TREATMENT REFILL" is displayed as the name of the similar article.

When pieces of detailed information of the registration-target image and the similar image are detected, frames SP1, SP2 are displayed at the pieces of detailed information of the image data as illustrated in screen MN3. In this manner, in frames FR1, FR3, a mark such as a rectangular frame is overlappingly displayed at a region indicating the detailed information of the image data. When using a mark and a frame, the shape of the frame may not be a rectangle but may be, for example, a circle or an ellipse. Furthermore, the mark is not necessarily a frame, and may be, for example, a whole translucent figure, or an arrow indicating a region of detailed information. That is, the mark may be of any shape as long as the shape attracts the user's attention to the region of the detailed information. In addition, texts relating to detailed information are displayed in frames FR5, FR6.

Finally, when common regions of the registration-target image and a similar image are detected, frames CO1, CO2 are displayed at the common regions as illustrated in screen MN4.

As described above, registration device 30 can display to the user the detailed information, the common region, and the detailed information-location information to be registered in article DB 34. As a result, since the user can make correction when there is an error in the information to be registered, registration device 30 prevents registration of erroneous information in article DB 34 and enables generation of article DB 34 having high accuracy. Furthermore, registration device 30 can improve user convenience.

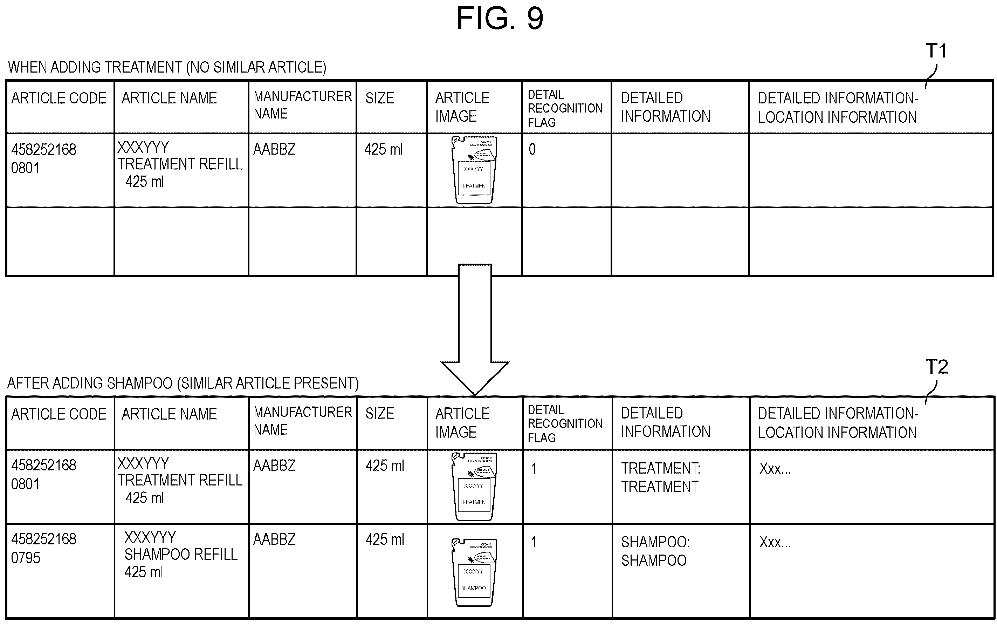

Next, an example of data stored in article DB 34 will be described with reference to Fig. 9. Fig. 9 is a diagram illustrating an example of data stored in article DB 34. In Fig. 9, a treatment and a shampoo will be described as example articles to be registered in article DB 34. Note that the example data illustrated in Fig. 9 is an example and it is not limited to the example.

Table T1 is an example of data in which a treatment is added to article DB 34. Article code, article name, manufacturer name, size, and detail recognition flag are associated with a captured image of an article. For example, the detail recognition flag is "1" when a flag is to be set, and is "0" when no flag is to be set. When a treatment is registered in article DB 34 in which no similar article is registered, the detail recognition flag is 0, and no detailed information and no detailed information-location information are registered.

Table T2 is an example of data in which a shampoo, which is an article similar to the treatment, is added after the treatment is registered in article DB 34.

Since the shampoo is an article similar to the already registered treatment, the detail recognition flags for the treatment and the shampoo are "1". Detailed information and detailed information-location information are also added to the registration information related to the treatment. In the registration information related to the shampoo, article code, article name, manufacturer name, size, detail recognition flag, detailed information, and detailed information-location information are associated with a captured image.

A text extracted from the article name and a text extracted from image data are stored in the detailed information. For example, in Table T2, "TREATMENT" extracted from the article name and "TREATMENT" extracted from the image data are stored as detailed information. Note that the detailed information is not limited to text, and the image data of a design showing a feature of the article may be stored. For example, when an article is an apple taste black tea, an image of apple may be stored as detailed information.

### (Recognition Process)

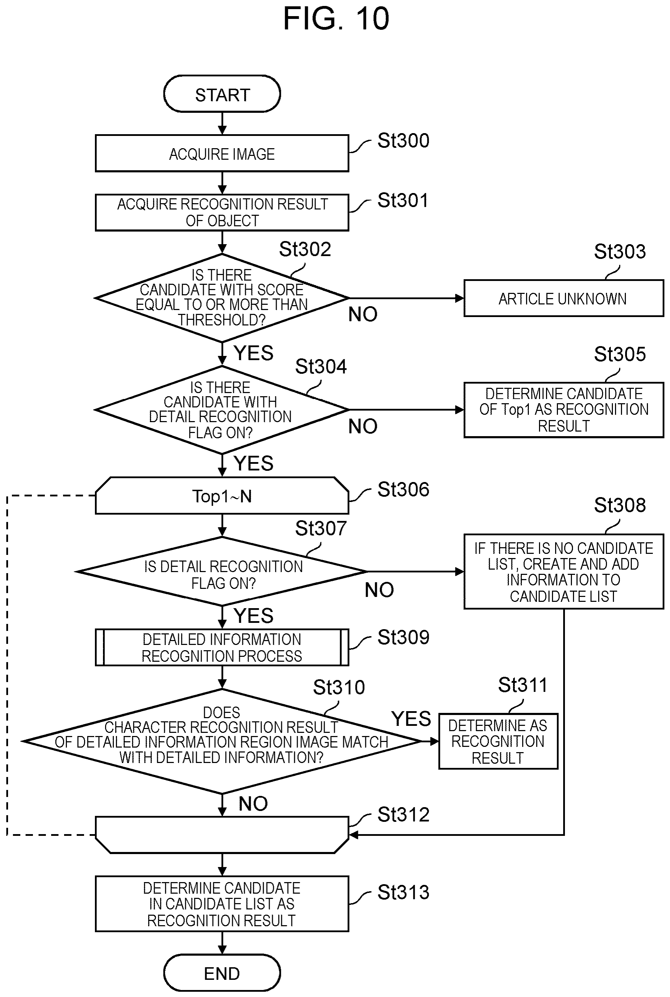

Next, a method of authenticating an object using the generated article DB 34 will be described. First, the processing of recognizing an object will be described with reference to Fig. 10. Fig. 10 is a flowchart illustrating an example of the processing of recognizing an object.

Controller 231 causes imaging device 10 to capture an image of an object to be authenticated. The captured image of the object is acquired from imaging device 10 (step St300). Controller 231 outputs the captured image to object recognition call unit 232.

Object recognition call unit 232 transmits the captured image to article recognition unit 333 via controller 231 and outputs an instruction to calculate a feature amount. Article recognition unit 333 calculates a feature amount of the captured image and a feature amount of an article stored in article DB 34 using a known technique. Note that, when feature amounts of the articles are stored in article DB 34, article recognition unit 333 may read a stored feature amount instead of calculating the feature amount of the article again. Article recognition unit 333 calculates the similarity between the article stored in article DB 34 and the object based on the calculated feature amounts of the object and the article stored in article DB 34. Article recognition unit 333 outputs the score to controller 231. Controller 231 acquires the score of the article stored in article DB 34 as a recognition result of the object (step St301).

Controller 231 determines whether there is a candidate article of which score is equal to or more than a threshold among the articles stored in article DB 34 and of which scores are acquired by the processing of step St301 (step St302).

When there is no candidate of which score is equal to or more than the threshold in the processing of step St302 (NO in step St302), controller 231 determines that the object cannot be identified from article DB 34(step St303). When it cannot be identified what article the object is, controller 231 may cause display device 11 to display a screen telling that the object cannot be identified.

When it is determined in the processing of step St302 that there is a candidate of which score is equal to or more than the threshold (YES in step St302), controller 231 determines whether there is a candidate of which detail recognition flag is on (step St304).

When it is determined that there is no candidate of which detail recognition flag is on (NO in step St304), controller 231 determines that the candidate article of which score is the highest (referred to as Top1) is the object (step St305).

When it is determined that there is a candidate of which detail recognition flag is on (YES in step St304), controller 231 checks the presence or absence of detailed information (that is, the presence or absence of the detail recognition flag) for every candidate, and performs the recognition process of detailed information (step St306). N in step St306 is the number of candidates and is an integer of 1 or more. Controller 231 executes the processing of step St306 in descending order of score.

Controller 231 determines whether the detail recognition flag of the candidate is on (step St307). When it is determined that the detail recognition flag of the candidate is not on (NO in step St307), if there is no candidate list, controller 231 creates a candidate list and adds the information of the candidate to the candidate list. The candidate list is a list for storing an article whose score is equal to or more than the threshold and whose detail recognition flag is off. The candidate list is used, when none of the articles of which detailed information is registered is determined as a recognition result, to determine a recognition result from among the articles of which detailed information is not registered. Note that, when there is already a candidate list, controller 231 may or may not add information of the matching article to the candidate list. This is because, in the present exemplary embodiment, even when the information of the matching article is added to the candidate list, the possibility that the matching article is finally determined as a recognition result is low. The reason for this will be described below. Since the processing of step St306 is performed in descending order of score, when there is already a candidate list, an article having a higher score than the matching article is already recorded in the candidate list. Here, the candidate list is the information that is used for determining an article without using the detailed information, and the recognition result is determined based on, for example, the magnitude of score. That is, the possibility of an article having a lower score than an article already recorded in the candidate list being determined as the recognition result is low. That is, controller 231 may add only the information of the article having the highest score among the candidate articles of which detail recognition flags are not turned on to the candidate list. Note that, when the processing of step St306 is not performed in descending order of score, the scores of the articles already included in the candidate list may be compared with the score of the matching article, and only the article having a higher score may be stored in the candidate list.

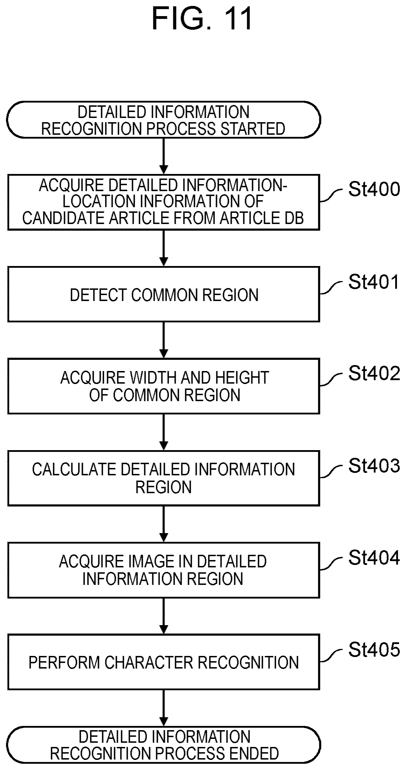

When it is determined that the detail recognition flag of the candidate is on (YES in step St307), controller 231 executes a detailed information recognition process (step St309). The detailed information recognition process will be described in detail with reference to Fig. 11.

Detailed information recognition unit 234 determines whether the result of character recognition of an image of the region indicating detailed information matches the detailed information of a candidate article stored in article DB 34 based on the processing result of step St309 (step St310). Note that, in the processing of step St310, not only when the character recognition gives a result of complete match, detailed information recognition unit 234 may also regard as matched result for a case of different expressions like hiragana, katakana, romaji, and the like, a case of different languages like Japanese and English, and a case of synonyms, for example.

When it is determined that the result of character recognition of the image of the region indicating the detailed information matches the detailed information of the candidate article stored in article DB 34 (YES in step St310), detailed information recognition unit 234 determines that the object is the article used in the processing of step St310 (step St311).

When it is determined that the result of character recognition of the image of the region indicating the detailed information does not match the detailed information of the candidate article stored in article DB 34 (NO in step St310), detailed information recognition unit 234 executes processing on an article having the next highest score (step St312).

When it is determined that the result of character recognition of the image of the region indicating the detailed information does not match the detailed information of candidate articles stored in article DB 34 for all the N candidates, detailed information recognition unit 234 determines the candidate in the candidate list as a recognition result (step St313). When a plurality of articles is included in the candidate list, detailed information recognition unit 234 may determine the article having the highest score as a recognition result, or may cause display device 11 to display a screen prompting a user to select which article is determined as a recognition result.

Next, detailed information recognition process will be described with reference to Fig. 11. Fig. 11 is a flowchart illustrating a detailed information recognition process.

Detailed information acquisition unit 233 acquires the detailed information-location information of the candidate article from article DB 34 via controller 231 (step St400). Detailed information acquisition unit 233 outputs the detailed information-location information acquired in the processing of step St400 to detailed information recognition unit 234.

Detailed information recognition unit 234 detects the common region of the object (step St401). Note that, when the image data of the common region of the candidate article is stored in article DB 34, detailed information recognition unit 234 may detect the common region of the object with reference to the image data.

Detailed information recognition unit 234 detects and acquires the width and the height of the common region (step St402).

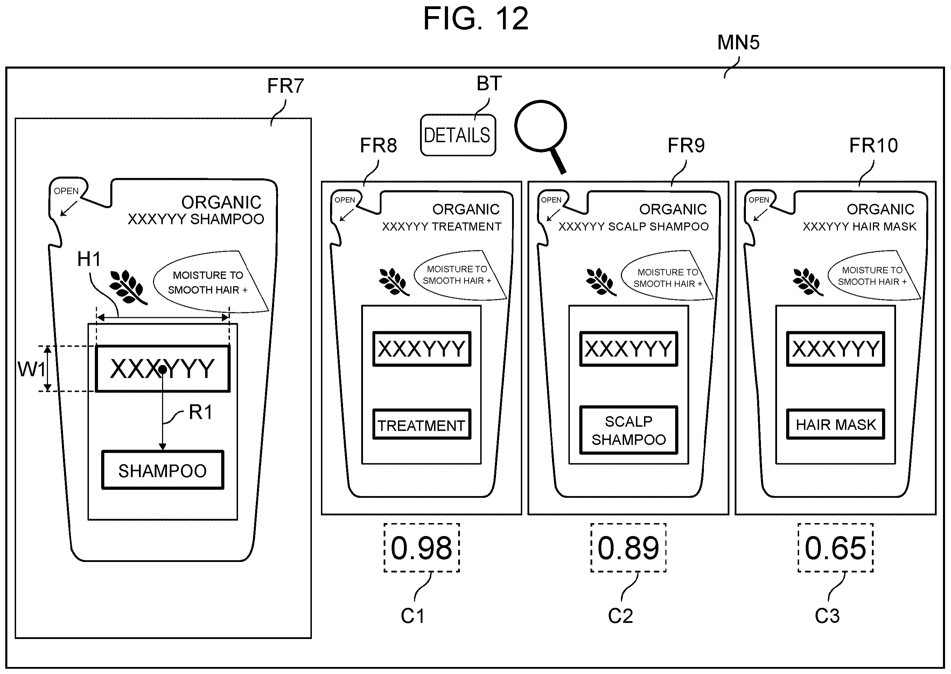

Detailed information recognition unit 234 calculates the location of the region of the detailed information (referred to as a detailed information region) in the captured image from the detailed information-location information of the candidate article and the information on the width and the height of the common region calculated in the processing of step St402 (step St403). For example, in the example illustrated in Fig. 12, detailed information recognition unit 234 detects the detailed information by calculating distance R1 from the common region to the detailed information from width H1 and height W1 of the common region in the captured image displayed in frame FR7. Note that a calculation target of detailed information recognition unit 234 is not limited to the location of the detailed information region, and may include other information. For example, information such as the width and the height of the detailed information region may be included.

Detailed information recognition unit 234 acquires an image of the detailed information region calculated in the processing of step St403 (step St404). Detailed information recognition unit 234 may cut out an image of the detailed information region from the captured image of the object, or may put a mark such as a rectangular frame on the detailed information region.

Detailed information recognition unit 234 performs character recognition on the detailed information region and detects a character string written in the detailed information region (step St405).

As described above, using the detailed information and the detailed information-location information stored in advance in article DB 34, recognition terminal 20 can execute character recognition focusing on a portion of the captured image of the object where there is high possibility that a text indicating a feature is written. That is, even when there is another article having outer appearance very similar to the outer appearance of the object, recognition terminal 20 executes character recognition focusing on a portion of the outer appearance of the object where a text indicating a feature is written, so that identification can be performed while an article having very similar outer appearance is distinguished with high accuracy. As a result, recognition terminal 20 can recognize the object with high accuracy using article DB 34.

In the above description, a case where the detailed information is character information has been described as an example. When the detailed information is a design such as a picture, recognition terminal 20 may determine whether an image in the detailed information region matches the detailed information of a candidate article stored in article DB 34 by image recognition instead of character recognition. Note that, in image recognition in general, information indicating similarity between images is output. Therefore, for example, a user may appropriately adjust the threshold for determining matching of detailed information to set how strictly recognition terminal 20 determines the degree of matching of detailed information.

Next, an example of a screen displayed in an authentication process will be described with reference to Fig. 12. Fig. 12 is a diagram illustrating an example of a screen displayed in the authentication process.

Screen MN5 is an example of a screen displaying an article similar to the object (that is, an article similar to the object having a score equal to or more than a threshold).

Frame FR7 displays a captured image of the object. Frames FR8, FR9, FR10 display articles having scores equal to or more than a threshold among the articles registered in article DB 34. Regions C1, C2, C3 display the scores of the articles. In the example illustrated in screen MN5, the score of the article displayed in frame FR8 is "0.98", which is the highest among the three articles, and the score of the article displayed in frame FR10 is "0.65", which is the lowest among the three articles. The articles may be displayed in order of score like this.

In the captured images displayed in frames FR7, FR8, FR9, FR10, rectangular frames are overlappingly displayed on detected common regions and on detected pieces of detailed information. For example, when a user presses button BT, a rectangular frame is overlapped on the common region and the detailed information. Additionally, it may be switchable between an image on which the rectangular frame is overlapped and an image on which the rectangular frame is not overlapped by a user pressing button BT. Accordingly, recognition terminal 20 can assist the user to check whether there is an error in a detection result of a common region and detailed information.

### (Summary of Exemplary Embodiments)

The following techniques are disclosed by the above description of the present exemplary embodiment.

### <Technique 1>

A registration device according to the present exemplary embodiment includes a processor that performs a registration process of an article, and a database that stores information on the article, wherein the processor is configured to acquire first image data of an article to be registered in the database, calculate similarity of second image data of each of at least one registered article already stored in the database to the first image data of the article to be registered, determine whether there is a registered article of which similarity is equal to or more than a threshold, and when it is determined that there is a registered article of which similarity is equal to or more than the threshold, register detailed information indicating a detailed classification of the article to be registered in the database in association with the first image data.

As a result, when there is another article having outer appearance similar to that of the article to be registered, the registration device according to the present exemplary embodiment can register the detailed information in the database in association with the first image data. That is, the registration device can generate a database that assists in accurately distinguishing the article to be registered having similar appearance based on the detailed information to perform accurate classification when recognizing an object. This enables the registration device to assist in accurate identification of an object.

### <Technique 2>

The registration device according to Technique 1, wherein the processor is configured to further acquire a name of the article to be registered, when it is determined that there is a registered article of which similarity is equal to or more than the threshold, extract first information indicating a feature of the article to be registered from the name, extract second information indicating the same meaning as the first information from the first image data, and register the second information as the detailed information in the database in association with the first image data.

Accordingly, the registration device according to the present exemplary embodiment can register, in the database in advance, the second information indicating the features of the article to be registered included in the first image data, which is the data of the outer appearance of the article to be registered. This allows the registration device to generate a database that assists in extracting the feature of the object with high accuracy when the object is recognized using the database.

### <Technique 3>

The registration device according to Technique 1 or 2, wherein the processor is configured to detect a common region having a design common to the second image data from the first image data, calculate a relative location between the common region and the second information, and register information on the relative location in the database in further association with the first image data.

Accordingly, the registration device according to the present exemplary embodiment can store the location information of the second information in the database in advance. That is, the registration device can generate a database that assists in performing character recognition or image recognition at a place where information indicating a feature of an object is located when the object is recognized using the database. This allows the registration device to generate a database that assists in recognizing the information indicating the feature of the object with high accuracy.

### <Technique 4>

In the registration device according to any one of Techniques 1 to 3, the second information is character information or an image.

Accordingly, the registration device according to the present exemplary embodiment can store, in the database in advance, a text, a character string, or an image indicating a feature of the article included in the first image data.

### <Technique 5>

In the registration device according to any one of Techniques 1 to 4, the processor displays a screen including first image data in which a mark is overlapped at a place where the second information is located in the first image data, the name of the article to be registered, and the second information on a display device communicably connected to the processor.

Accordingly, the registration device according to the present exemplary embodiment allows a user to check the information to be registered in the database. Accordingly, the user can check whether there is an error in the information to be registered in the database, and thus the registration device can improve the convenience of the user.

### <Technique 6>

The registration device according to any one of Techniques 1 to 5, wherein the detailed information is information indicating a feature different from a feature of the registered article of which similarity is equal to or more than the threshold among the detailed classification of the article to be registered in the first image data.

Accordingly, the registration device according to the present exemplary embodiment can distinguish with high accuracy the object from the registered article of which similarity is equal to or more than the threshold and of which outer appearance is similar using the detailed information.

### <Technique 7>

The registration device according to any one of Techniques 1 to 6, wherein the processor further registers, in the database, classification presence or absence information indicating whether the detailed information is registered in the database in association with the first image data.

Accordingly, the registration device according to the present exemplary embodiment can determine, when recognition of the object is performed, whether further detailed classification is necessary based on the classification presence or absence information, and generate a database that assists in performing detailed classification as necessary.

### <Technique 8>

The registration device according to any one of Techniques 1 to 7, wherein the first image data is a captured image obtained by imaging the article to be registered by an imaging device communicably connected to the processor.

Accordingly, the registration device according to the present exemplary embodiment can create image data to be registered in the database by imaging the actual article to be registered with the imaging device when there is no image data of the outer appearance of the article to be registered provided from a company or the like that sells the article to be registered.

### <Technique 9>

A recognition device according to the present exemplary embodiment includes a processor communicably connected to a database in which article information is registered in advance, and configured to perform authentication of an object, wherein the processor is configured to determine whether there is an article similar to the object in the database, when it is determined that there is a similar article similar to the object in the database, determine whether registration information of the similar article stored in the database includes classification presence or absence information indicating whether a detailed classification of the similar article is included, and when it is determined that the classification presence or absence information indicating that the detailed classification is included is included, detect detailed information indicating a feature of the object from a captured image of the object.

Accordingly, the recognition device according to the present exemplary embodiment recognizes the object using the database in which the article information is registered in advance, and thus, can perform the detailed recognition process of the object based on the classification presence or absence information. This allows, when there is an article having outer appearance similar to that of the object, the recognition device to perform detailed recognition process to identify the object with high accuracy.

### <Technique 10>

The recognition device according to Techniques 9, wherein the processor is configured to detect, from the captured image of the object, a common region having a design common to image data of the similar article, and detect the detailed information from the captured image of the object based on information on a relative location between the common region and the detailed information, the relative location being included in the registration information of the similar article.

Accordingly, the recognition device according to the present exemplary embodiment can detect the detailed information from the captured image of the object with high accuracy. This allows the recognition device to suppress erroneous recognition of the object.

### <Technique 11>

The recognition device according to Technique 9 or 10, wherein when the detailed information that is detected matches detailed information of the similar article, the processor determines that the object is an article equivalent to the similar article.

Accordingly, the recognition device according to the present exemplary embodiment can recognize the object with high accuracy based on the detailed information.

### <Technique 12>

The recognition device according to any one of Techniques 9 to 11, wherein when it is determined that there is a plurality of the similar articles similar to the object in the database, the processor determines whether the detailed information that is detected matches the detailed information of the similar article in descending order of similarity between the object and the similar article.

As a result, even when there is a plurality of similar articles similar to the object in the database, the recognition device according to the present exemplary embodiment can identify which similar article the object corresponds to with high accuracy.

The exemplary embodiment has been described above with reference to the accompanying drawings, but the present disclosure is not limited to the examples. It is apparent that those skilled in the art can conceive various modification examples, correction examples, substitution examples, additional examples, removal examples, and equivalent examples within the scope described in the claims, and those examples are understood to be within the technical scope of the present disclosure. In addition, the components in the above-described exemplary embodiment may be optionally combined without departing from the spirit of the present invention.

The entire disclosure of the specification, drawings, and abstract included in Japanese Patent Application No. 2023-108923 filed on June 30, 2023 is incorporated herein by reference.

### INDUSTRIAL APPLICABILITY

The technique of the present disclosure is useful as a registration device, a registration method, a recognition device, a recognition method, and a program that assists in highly accurate identification of an object.

### REFERENCE MARKS IN THE DRAWINGS

1: recognition system
10: imaging device
11: display device
12: input device
20: recognition terminal
21: memory
22: communication I/F
23: processor
231: controller
232: object recognition call unit
233: detailed information acquisition unit
234: detailed information recognition unit
30: registration device
31: communication I/F
32: memory
33: processor
331: controller
332: article registration unit
333: article recognition unit
334: similar article determination unit
335: detailed information acquisition unit
336: detailed information registration unit
34: article DB
40: imaging device
41: display device
42: input device

## Claims

1. A registration device comprising:
a processor that performs a registration process of an article; and
a database that stores information on the article, wherein
the processor is configured to
acquire first image data of an article to be registered in the database,
calculate similarity of second image data of each of at least one registered article already stored in the database to the first image data of the article to be registered,
determine whether there is a registered article of which similarity is equal to or more than a threshold, and
when it is determined that there is a registered article of which similarity is equal to or more than the threshold, register detailed information indicating a detailed classification of the article to be registered in the database in association with the first image data.

2. The registration device according to Claim 1, wherein
the processor is configured to
further acquire a name of the article to be registered,
when it is determined that there is a registered article of which similarity is equal to or more than the threshold, extract first information indicating a feature of the article to be registered from the name,
extract second information indicating a same meaning as the first information from the first image data, and
register the second information as the detailed information in the database in association with the first image data.

3. The registration device according to Claim 2, wherein
the processor is configured to
detect a common region having a design common to the second image data from the first image data,
calculate a relative location between the common region and the second information, and
register information on the relative location in the database in further association with the first image data.

4. The registration device according to Claim 2, wherein
the second information is character information or an image.

5. The registration device according to Claim 2, wherein
the processor displays a screen including first image data in which a mark is overlapped at a place where the second information is located in the first image data, the name of the article to be registered, and the second information on a display device communicably connected to the processor.

6. The registration device according to Claim 1, wherein
the detailed information is information indicating a feature different from a feature of the registered article of which similarity is equal to or more than the threshold among the detailed classification of the article to be registered in the first image data.

7. The registration device according to Claim 1, wherein
the processor further registers, in the database, classification presence or absence information indicating whether the detailed information is registered in the database in association with the first image data.

8. The registration device according to Claim 1, wherein
the first image data is a captured image obtained by imaging the article to be registered by an imaging device communicably connected to the processor.

9. A registration method comprising:
acquiring first image data of an article to be registered in the database;
calculating similarity of second image data of each of at least one registered article already stored in the database to the first image data of the article to be registered;
determining whether there is a registered article of which similarity is equal to or more than a threshold; and
when it is determined that there is a registered article of which similarity is equal to or more than the threshold, registering detailed information indicating a detailed classification of the article to be registered in the database in association with the first image data.

10. A recognition device comprising
a processor communicably connected to a database in which article information is registered in advance, and configured to perform authentication of an object, wherein
the processor is configured to
determine whether there is an article similar to the object in the database,
when it is determined that there is a similar article similar to the object in the database, determine whether registration information of the similar article stored in the database includes classification presence or absence information indicating whether a detailed classification of the similar article is included, and
when it is determined that the classification presence or absence information indicating that the detailed classification is included is included, detect detailed information indicating a feature of the object from a captured image of the object.

11. The recognition device according to Claim 10, wherein
the processor is configured to
detect, from the captured image of the object, a common region having a design common to image data of the similar article, and
detect the detailed information from the captured image of the object based on information on a relative location between the common region and the detailed information, the relative location being included in the registration information of the similar article.

12. The recognition device according to Claim 11, wherein
when the detailed information that is detected matches detailed information of the similar article, the processor determines that the object is an article equivalent to the similar article.

13. The recognition device according to Claim 12, wherein
when it is determined that there is a plurality of the similar articles similar to the object in the database, the processor determines whether the detailed information that is detected matches the detailed information of the similar article in descending order of similarity between the object and the similar article.

14. A recognition method comprising:
determining whether there is an article similar to an object to be authenticated in a database in which article information is registered in advance;
when it is determined that there is a similar article similar to the object in the database, determining whether registration information of the similar article stored in the database includes classification presence or absence information indicating whether a detailed classification of the similar article is included; and
when it is determined that the classification presence or absence information indicating that the detailed classification is included is included, detecting detailed information indicating a feature of the object from a captured image of the object.

15. A program causing a computer to execute:
processing of determining whether there is an article similar to an object to be authenticated in a database in which article information is registered in advance;
when it is determined that there is a similar article similar to the object in the database, processing of determining whether registration information of the similar article stored in the database includes classification presence or absence information indicating whether a detailed classification of the similar article is included; and
when it is determined that the classification presence or absence information indicating that the detailed classification is included is included, processing of detecting detailed information indicating a feature of the object from a captured image of the object.
